Europäisches Patentamt

European Patent Office

Office européen des brevets

(11) Numéro de publication: **0 291 375**
**A1**

## (12) DEMANDE DE BREVET EUROPEEN

(21) Numéro de dépôt: **88401011.7**

(22) Date de dépôt: **26.04.88**

(51) Int. Cl.4: **F 16 K 15/02**
// E03C1/10

(30) Priorité: **15.05.87 FR 8706819**

(43) Date de publication de la demande:
**17.11.88 Bulletin 88/46**

(84) Etats contractants désignés:
**AT BE CH DE ES GB GR IT LI LU NL SE**

(71) Demandeur: **LES ROBINETS PRESTO Société anonyme dite:**
**7, rue Racine**
**F-92120 Montrouge (FR)**

(72) Inventeur: **Gourbil, François**
**22, rue de la Motte**
**F-17600 Medis (FR)**

(74) Mandataire: **Vander-Heym, Serge et al**
**CABINET R. VANDER-HEYM 172, Boulevard Voltaire**
**F-75011 Paris (FR)**

(54) Clapet anti-retour.

(57) Clapet anti-retour du genre de ceux présentant un corps (1) creux, deux embouts (3-4) auxquels on raccorde respectivement les canalisations d'entrée et de sortie, un siège (6) et un clapet (7) poussé contre ledit siège à l'encontre de 1 écoulement normal du fluide par un ressort (8) maintenu dans ledit corps par un bouchon (9), caractérisé en ce que le clapet (7) présente un orifice (15) et une jupe (10) s'étendant en aval du sens d'écoulement du fluide et communiquant avec l'embout de sortie (3), ladite jupe étant obturée de façon étanche par un piston (11) repoussé vers l'extrémité (10a) de cette dernière par un ressort (12) interposé entre ledit piston et le clapet (7).

Fig.1

EP 0 291 375 A1

## Description

La présente invention est relative à un clapet anti-retour destiné à être interposé sur la canalisation d'alimentation d'un robinet mélangeur à fermeture temporisée.

Selon la technique actuelle, les robinets à fermeture temporisée sont pourvus d'un dispositif de sécurité s'opposant au soulèvement du clapet principal, donc à l'écoulement de l'eau tant que l'utilisateur n'a pas relâché sa pression sur le bouton-poussoir du robinet.

Dés lors, lorsque l'utilisateur enfonce le bouton-poussoir,il comprime de l'eau dans le robinet et la refoule vers la conduite d'arrivée mais, si la conduite précitée est pourvue d'un clapet anti-retour, ce refoulement est impossible.

En l'état actuel de la technique, il n'est donc pas possible sur une installation sanitaire d'utiliser un robinet temporisé de sécurité et un clapet anti-retour.

La présente invention concerne un clapet anti-retour qui, tout en remplissant sa fonction usuelle, peut être utilisé en coopération avec un robinet à fermeture temporisée de sécurité, c'est-à-dire un robinet qui tend à refouler un certain volume d'eau vers la canalisation d'arrivée lorsqu'on enfonce son bouton-poussoir.

Selon l'invention,l'organe formant le clapet du clapet anti-retour est percé et présente une jupe cylindrique, en aval de l'écoulement de l'eau , communiquant avec l'orifice de sortie de l'eau, ladite jupe formant une chambre dans laquelle peut se déplacer un piston, un ressort étant interposé entre le fond de ladite chambre et ledit piston.

L'invention sera mieux comprise par la description qui va suivre, faite en se référant aux dessins annexés, sur lesquels:

La figure 1 est une vue en coupe d'un clapet anti-rétour, conforme à l'invention ;

La figure 2 est une vue en coupe effectuée selon la ligne II-II de la figure 1;

La figure 3 est une vue, analogue à celle 1,montrant la position du clapet lorsqu'on soutire de l'eau;

La figure 4 est une vue en coupe, effectuée selon la ligne IV-IV de la figure 3;

La figure 5 est une vue, analogue à la figure 1 , montrant la position des organes mobiles lorsqu'on refoule de l'eau dans la canalisation suite à une action sur le bouton-poussoir usuel du robinet situé en aval;

La figure 6 est une vue,analogue à la figure 1, montrant la possibilité de transformer le clapet anti-retour en robinet d'arrêt;

La figure 7 est une vue, analogue à la figure 6, montrant le clapet anti-retour de l'invention, utilisé comme un robinet d'arrêt.

En se reportant aux dessins, on voit que le clapet anti-retour de l'invention comporte un corps 1, creux, présentant des embouts 2 et 3 auxquels on raccorde des canalisations d'entrée et de sortie,respectivement 4 et 5, la canalisation 5 étant raccordée à l'entrée d'un robinet mitigeur à fermeture temporisée usuel, non représenté.

De la façon connue, le corps 1 présente un siège 6,normalement obturé par un clapet 7 poussé contre ledit siège, à l'encontre du sens d'écoulement de l'eau qui pénètre dans le corps par la canalisation 4, par un ressort 8 maintenu dans le corps par un bouchon 9.

Selon l'invention, le clapet 7 présente, en aval du sens d'écoulement normal de l'eau, une jupe 10 cylindrique, dont l'extrémité communique avec l'embout 3 de sortie.

Un piston 11 peut se déplacer, de façon étanche, dans le cylindre formé par la jupe 10.

Le piston 11 est soumis à l'action d'un ressort 12,interposé entre lui et le clapet 7,des moyens étant prévus pour limiter le déplacement dudit piston sous l'action dudit ressort.

Un tel moyen peut être constitué par une clavette 13 traversant diamétralement la jupe 10.

La chambre 14, délimitée par la jupe 10,1e clapet 7 et le piston 11, communique avec l'embout d'arrivée 2 par l'entremise d'un orifice 15, prévu dans ledit clapet 7.

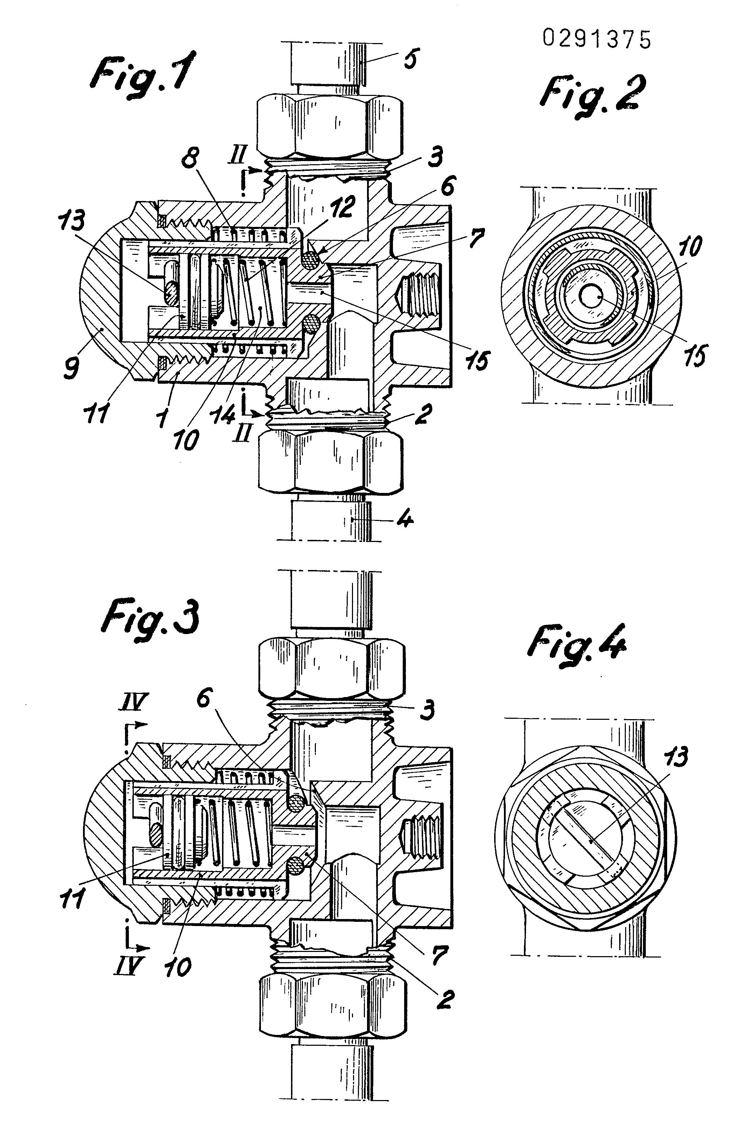

Lorsque le robinet est fermé, la pression est en équilibre de part et d'autre du clapet 7 et celui-ci,sous l'action du ressort 8, est maintenu contre son siège ( figure 1).

Lorsque le robinet est ouvert, un déséquilibre se produit entre la pression en aval du robinet et celle en amont qui est supérieure à la force du ressort 8 et le clapet se souléve (figure 3).

Lorsqu'on exerce une action sur le bouton-poussoir du robinet, on refoule un certain volume d'eau dans la canalisation 5 et, simultanément, on exerce une forte pression sur le piston 11 qui est repoussé vers le clapet 7.

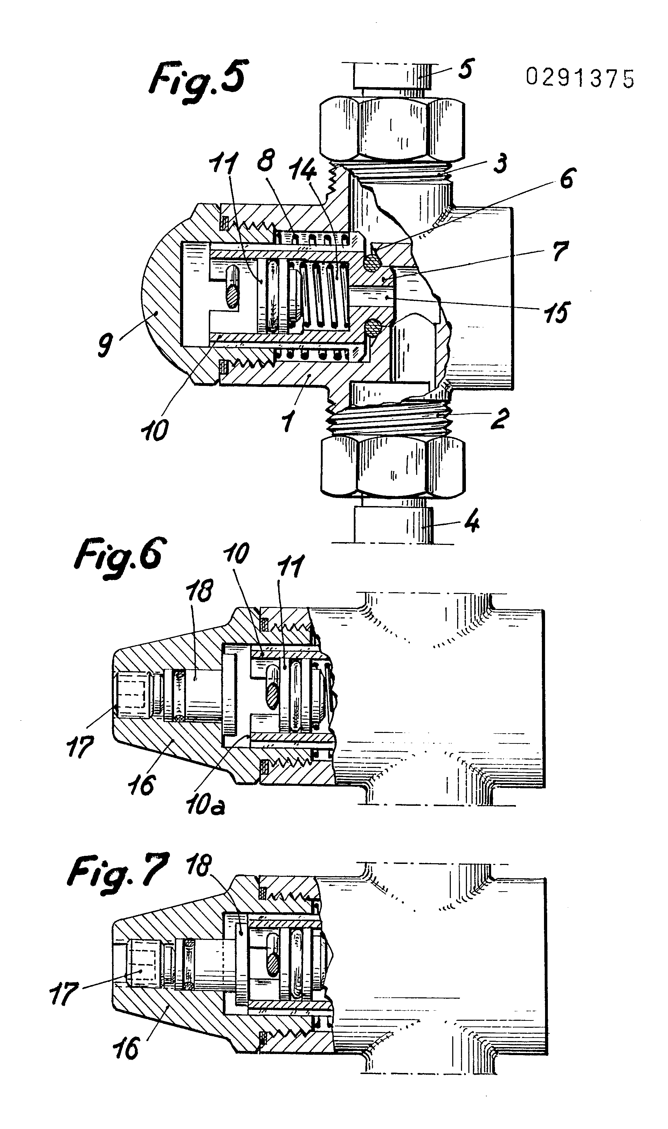

Le volume de la chambre 14 diminue et l'eau en excédent, résultant de cette diminution de volume,est refoulée vers la canalisation 4 à travers l'orifice 15 du clapet 7 (figure 5).

Selon une variante, le clapet anti-retour qui vient d'être décrit, peut être facilement transformé en robinet d'arrêt.

A cet effet, on substitue au bouchon 9, un bouchon 16 comportant une vis axiale 17, manoeuvrable de l'extérieur, susceptible de repousser un piston 18 de verrouillage, guidée de façon étanche dans ledit bouchon, pour appliquer ledit piston contre l'extrémité 10a de la jupe 10. Dans cete position, montrée sur la figure 7, le clapet 7 est mécaniquement verrouillé contre son siége et le clapet anti-retour fonctionne en robinet d'arrêt.

## Revendications

1-Clapet anti-retour du genre de ceux présentant un corps (1) creux, deux embouts (3-4) auxquels on raccorde respectivement les canalisations d'entrée et de sortie, un siége (6) et un clapet (7) poussé contre ledit siège à l'encontre de l'écoulement normal du fluide par un ressort (8) maintenu dans ledit corps par un bouchon (9),caractérisé en ce que le clapet (7) présente un orifice (15) et une jupe (10) s'étendant en aval du sens d'écoulement du fluide et communiquant avec l'embout de sortie (3),ladite jupe étant obturée de façon étanche par un piston (11) repoussé vers l'extrémité (10a) de cette dernière par un ressort (12) interposé entre ledit piston et le clapet (7).

2-Clapet anti-retour, selon la revendication I,caractérisé en ce que des moyens sont prévus pour limiter le déplacement du piston (11) sous l'action du ressort (12).

3-Clapet anti-retour, selon l'une quelconque des revendications 1 et 2,caractérisé en ce que des moyens sont prévus pour verrouiller le clapet (7) contre son siège (6).

4-Clapet anti-retour, selon la revendication 3, caractérisé en ce que le corps (1) présente un bouchon (16) dans lequel est engagée une vis (17), manoeuvrable de l'extérieur, susceptible d'appliquer un piston (I8),guidé de façon étanche dans ledit bouchon, sur l'extrémité (10a) de la jupe (10).

Fig.1  Fig.2  Fig.3  Fig.4

0291375

**Fig.5**

0291375

**Fig.6**

**Fig.7**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 442 238 (GULLICK)<br>* Page 2, colonne de gauche *<br>--- | 1 | F 16 K 15/02 //<br>E 03 C 1/10 |
| A | GB-A-1 285 733 (LOHTELLIER)<br>* En entier *<br>--- | 1 | |
| A | FR-A-2 577 903 (THIBONNET)<br>* Revendication; figure 1 *<br>--- | 1 | |
| A | FR-A-1 191 959 (CROSWELLER)<br>----- | | |

DOMAINES TECHNIQUES
RECHERCHES (Int. Cl.4)

F 16 K

Le présent rapport a été établi pour toutes les revendications

| Lieu de la recherche | Date d'achèvement de la recherche | Examinateur |
|---|---|---|
| LA HAYE | 02-08-1988 | VERELST P.E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)